# EUROPEAN PATENT APPLICATION

(11) **EP 1 652 649 A1**
(43) Date of publication of application: **03.05.2006**
(21) Application number: 03817787.9
(22) Date of filing: 04.08.2003
(51) Int. Cl.: B29C 45/38, B29C 45/26

(54) **METAL MOLD, AND FORMED BODY MOLDING METHOD BY THE METAL MOLD**

(71) Applicant: Coki Engineering Inc., Osaka-shi, Osaka 540-0037 (JP)
(72) Inventor: YOTSUTSUJI, Akira, COKI ENGINERRING INC., Osaka-shi, Osaka 540-0037 (JP)
(74) Representative: Skuhra, Udo
(86) International application number: PCT/JP2003/009904
(87) International publication number: WO 2005/011954

(57) **Abstract**

A metal mold capable of preventing a nonuniform wall thickness from occurring in a cylindrical formed product, wherein a gate (8) for filling molding material is formed in alignment with the center axis (CL) of a tubular mold cavity (4) so that metered resin can be injected and filled from the tip side of a core (5) into the mold cavity, whereby since the metered molding material injected from the gate into the mold cavity uniformly flows around the core, a force is uniformly applied to the side face of the core through all the periphery thereof to prevent the core from falling in one direction and to always position the core at the center of the mold cavity, the molded formed product cannot cause the nonuniform wall thickness.

## Description

### Technical Field

The present invention relates to a resource-saving type metal mold and a formed body molding method of a mold using the metal mold, which is capable of molding, in a case of a cylindrical molding, without causing nonuniform wall thickness using a molding material such as a resin, a kneaded material of a sintering powder and a resin binder or the like, and suitable for molding a molded formed product such as a cylinder for a syringe which requires an extremely high cleanliness and precision.

### Background Art

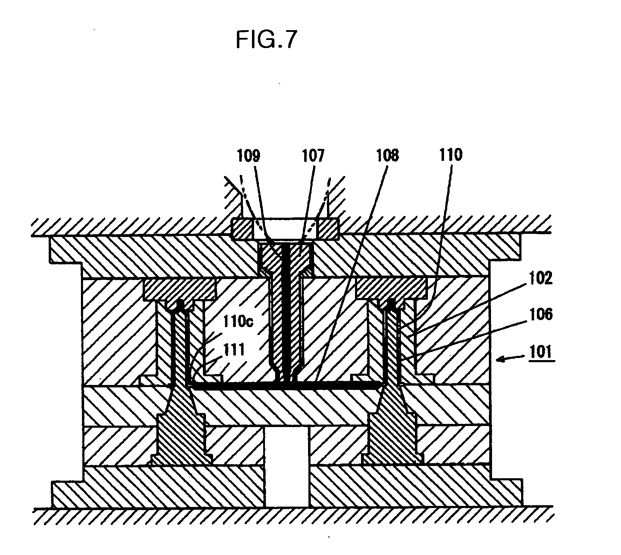

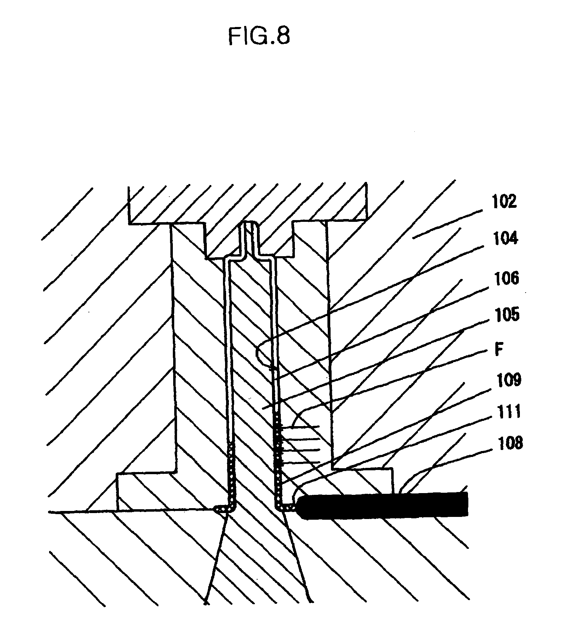

In a conventional metal mold (101) for cylinder molding, as shown in Fig. 7, a hot runner (107) is disposed in the central area of a female die (102) and a cold runner (108) is formed perpendicular thereto, and a metered resin (109) is filled within a cavity (106) with a high pressure through a flange portion (110c) of a cylinder (110). In this method, when the metered resin (109) is injected into the cavity (106) with a high pressure through the flange portion (110c) of the cylinder (110), the metered resin (109) is gradually filled therein from a portion closer to the gate (111) of the flange portion (110c) as shown in Fig. 8.

The injection filling pressure to the metered resin (109) reaches to a high pressure of 1,000-2,000 kg/cm², and a force (F) perpendicular to the center axis (CL) of the core (105) is applied to the side face portion of the core (105) closer to the gate (111), from which the resin (109) is filled first, a slight sag is made on the core (105) in a direction away from the gate (111). When such sag is generated, a difference [(t1)>(t2)] is generated between the width at the gate side (t1) and the width at the opposite side (t2) of the cavity (106), which is formed by the core (105) and the mold cavity (104) formed in the female die (102), a nonuniform wall thickness is generated in the molded cylinder (110) (US Patent No. 6,562,009B1).

An object of the present invention is to provide a hot runner type metal mold, which does not cause nonuniform wall thickness unlike the cold runner type which causes nonuniform wall thickness, and a formed body molding method using the metal mold.

### Disclosure of the Invention

An aspect of a metal mold (1) according to claim 1 of the present invention is a metal mold (1), which includes:
a cavity (6) having a predetermined internal shape;
a molding material injection path (12) communicated with the cavity (6) via a gate (8) for supplying a metered fluid molding material (9) to the cavity (6); and
a valve pin (7) disposed within the molding material injection path (12) so as to be inserted into and pulled out from the gate (8),
wherein the cavity (6) is formed with a cylindrical mold cavity (4) and a columnar core (5) to be coaxially inserted into and pulled out from the mold cavity (4), and the gate (8) for injecting the molding material is formed in alignment with the center axis (CL) of the mold cavity (4) to inject a metered resin from the front end side of the core (5) and fill the core (5) therewith. Accordingly, the gate (8) is formed on the center axis (CL) of the mold cavity (4) and the core (5), the metered molding material (9) injected into the cavity (6) from the gate (8) flows uniformly around the periphery of the core (5); no force is applied to the side face of the core (5) from one direction; the core (5) is prevented from falling in one direction but always positioned at the center of the mold cavity (4) throughout the course of the injection and filling of the molding material; as a result, a nonuniform wall thickness is not generated in the molded formed product (10).

As a particular shape of the cavity (6), there may be given such an example that the mold cavity (4) forms the outer surface of the cylinder, and the core (5) is for forming the cylinder inner surface.

As for the molding material (9) in the present invention, in addition to ordinary resins, a kneaded material of a sintering powder and a resin binder may be used.

A molding method using the metal mold (1) is a formed body molding method, which includes the steps of:
(a) injecting a metered molding material (9) from the molding material supply side (12) into a cavity (6) via a gate (8) to fill the cavity (6) therewith,
(b) after filling the cavity, applying and maintaining a predetermined pressure to the filled material within the cavity,
(c) after completing the pressure applying and maintaining step and after gate cutoff, returning a surplus molding material (9a) remaining at the gate (8) portion to the molding material supply side (12), and
(d) cooling the molding material (9) within the cavity (6) to solidify into a formed body (10), and then taking out the formed body (10),
wherein the cavity (6) includes a cylindrical mold cavity (4) and a columnar core (5) to be coaxially inserted into and pulled out f rom the mold cavity (4), and the gate (8) for injecting the molding material is formed in alignment with the center axis (CL) of the mold cavity (4), a metered resin is injected from the front end side of the core (5) to fill the core therewith.

### Brief Description of the Drawings

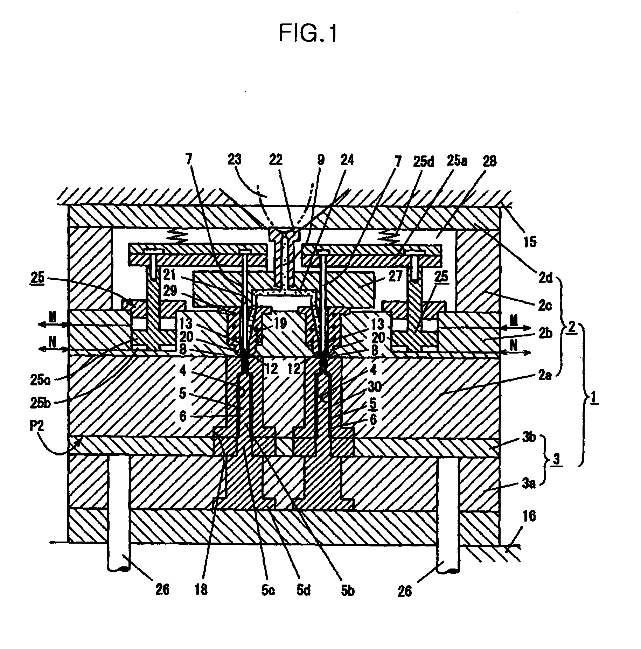

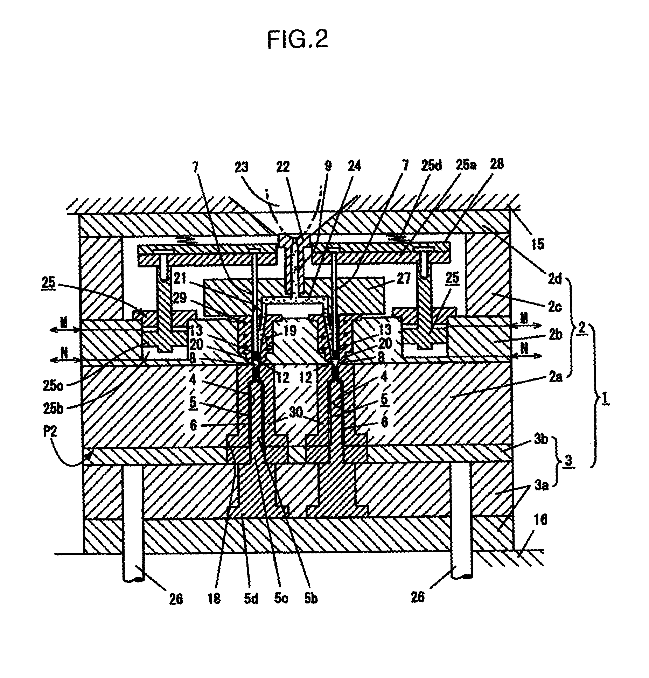

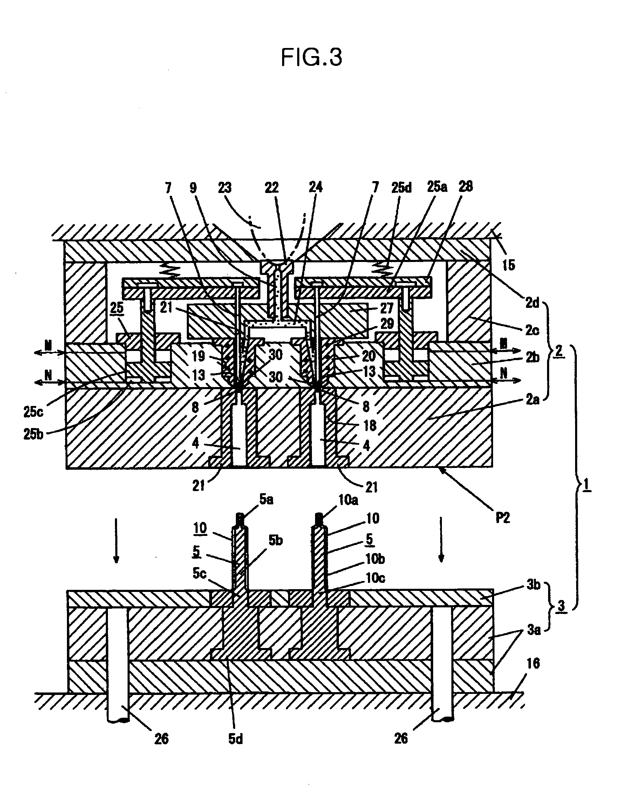

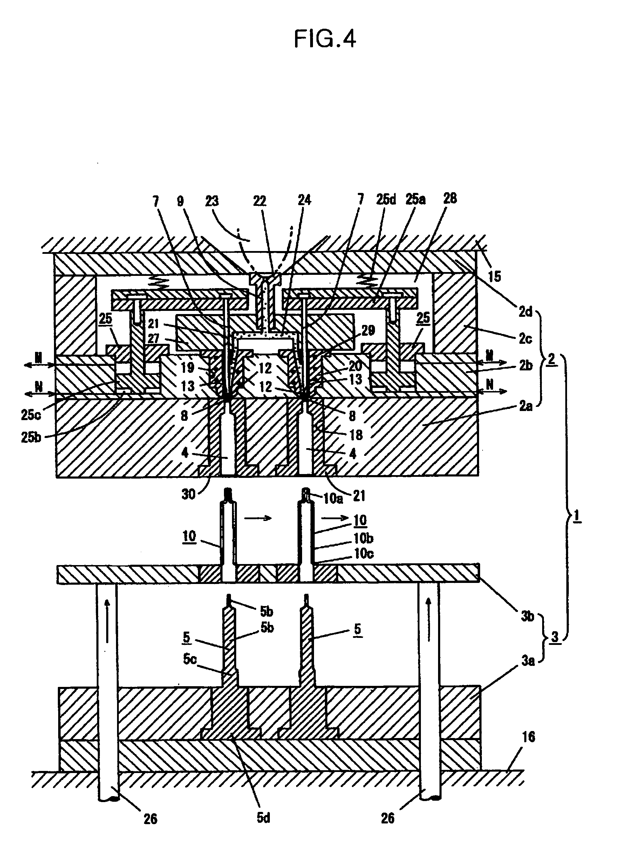

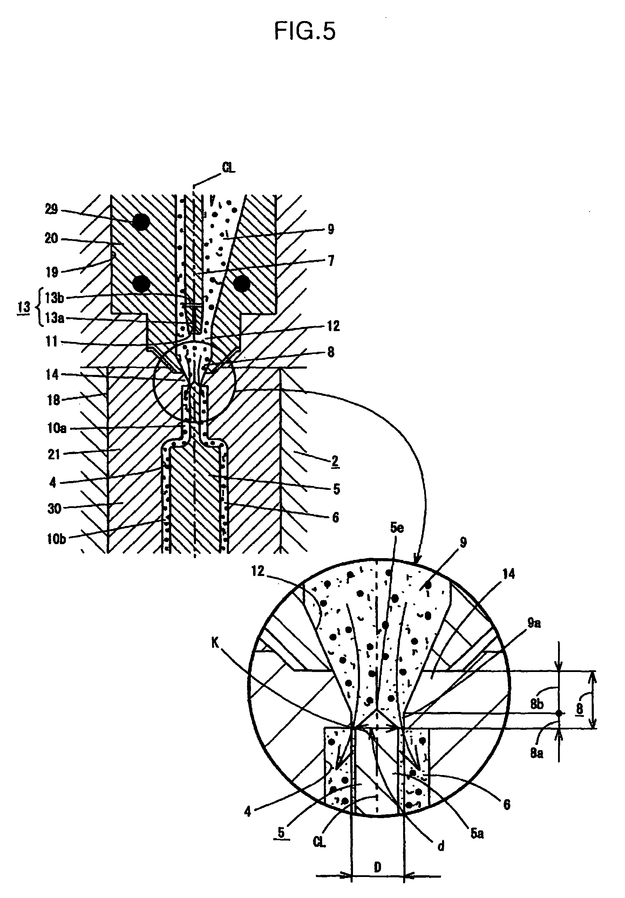

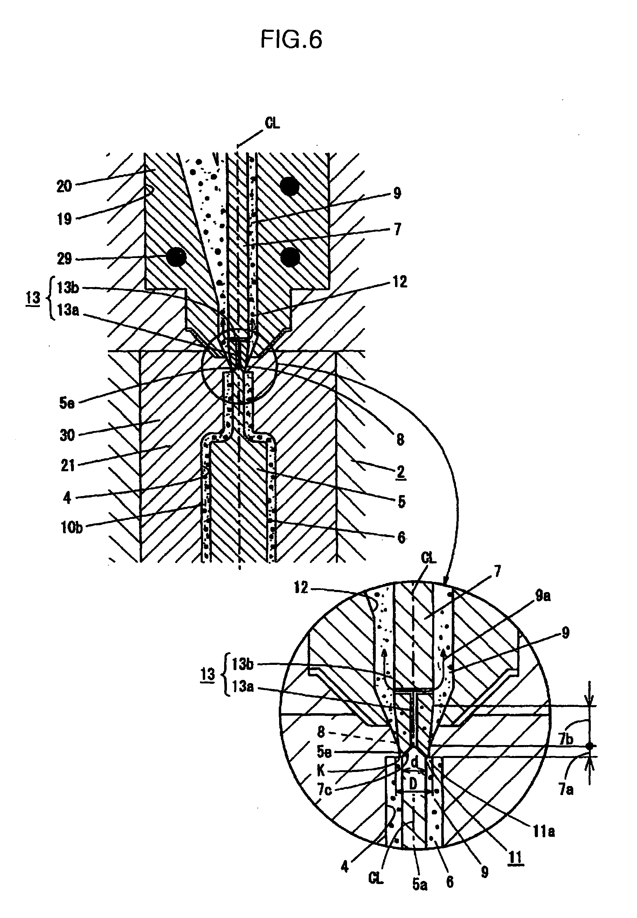

Fig. 1 is a cross sectional view showing a state of a closed metal mold according to a first embodiment of the present invention, Fig. 2 is a cross sectional view showing a state of gate-cut performed by the valve pin in Fig. 1, Fig. 3 is a cross sectional view showing a state that the metal mold in accordance with the first embodiment of the present invention is opened, Fig. 4 is a cross sectional view showing a state that products are ejected from the metal mold in accordance with the first embodiment of the present invention, Fig. 5 is an enlarged cross sectional view of a gate-cut state in the metal mold in accordance with the first embodiment of the present invention, Fig. 6 is an enlarged cross sectional view of a gate-open state in the metal mold in accordance with the first embodiment of the present invention, Fig. 7 is a cross sectional view of a conventional example, and Fig. 8 is an enlarged cross sectional view showing a state where metered molding material is being filled in the conventional example.

### Best Mode for Carrying Out the Invention

Hereinafter, the present invention will be described in detail in accordance with an embodiment with reference to the drawings. The present invention is applicable to forming any runner-less cylinder. As a typical example of the embodiment, a case where a cylindrical molded formed product (10) is produced using a columnar core (5) and a cylindrical mold cavity (4) will be described. The description will be made mainly taking an example in which an ordinary resin is used as a molding material. Other materials such as a kneaded material of a sintering powder and a resin binder may be used; and the following materials are available.

The molding material (9) includes a sintering powder and a binder resin including mainly two kinds of resins constituting a uniform mixture of a solvent soluble resin and a solvent insoluble resin. The sintering powder includes a metal material, an oxide, a nitride, quartz or glass as a main material to be sintered and a binder for binding the above.

As for the main sintering materials capable of being sintered, metal materials (stainless powder, Ni, W, Mo, Fe), carbides (WC, TiC, chromium carbide), nitrides (boron nitride, silicon nitride, aluminum nitride), oxides (quartz, aluminum, glass, zirconium) are available; and as the binder for binding these main sintering materials, Co and Ni are available. The oxides (quartz, aluminum, glass, zirconium) may be sintered with no binder. As the sintering articles of these materials, carbide material, cermet material, ceramic material, quartz glass material, tungsten material, stainless material, nickel material, molybdenum material, glass material or compound materials of the above are available. The optimum average particle size of the main sintering material depends on the usage. For example, in the case of the carbide material, average particle size of 0.2-0.5µm or so is preferred for ensuring the durability of the edge portion. Ordinary average particle size is 2µm or so.

The binder resin for supporting the sintering powder includes a solvent soluble resin, which is solved into one solvent and solvent insoluble resin, which is not solved into the solvent, as the main material and necessary additives such as plasticizer and release agent. It is preferred that the solvent soluble resin and the solvent insoluble resin are completely mixed and coexisting with each other at operation temperature. In this embodiment, the following resin is used; i.e., both are solved into a solvent at a melting temperature (high temperature) and separated from each other in a state that both are uniformly mixed with each other at an operation temperature.

Further, in order to enhance the shape retaining performance after degreasing and the uniform dispersion of the sintering powder, it is preferred to use a resin, which becomes fibrous or plumose in the solvent insoluble resin, rather than the case where the solvent soluble resin and the solvent insoluble resin are simply mixed. That is, in the case of a resin in which the solvent insoluble resin becomes fibrous or plumose, both are completely solved into the solvent soluble resin at a high temperature (= melting temperature of both). When the above is cooled down, the solvent insoluble resin is gradually separated out in a fibrous state; and among the fibers, the solvent soluble resin and the sintering powder are left in an entwined state; thus the solvent soluble resin and the sintering powder are extremely finely and uniformly dispersed into the fibrous solvent insoluble resin.

As an example of such solvent soluble resins, polystyrene, acrylate resin, vinyl chloride, cyclic polyolefin resin, polycarbonate and transient plastic are available. As an example of the solvent insoluble resin, polypropylene, polyethylene, polyacetal and the like are available. As for the solvent for solving the above at a high temperature (solvent insoluble resin separates at a room temperature), for example, aromatic solvents such as xylene, toluene, benzene and chlorinated solvents such as dichloromethane and dichloroethane are available. Further, as a plasticizer, dioctylphthalate, dibutylphthalate or the like are available. As a release agent, zinc stearate, stearic acid amide are available. The mixture ratio between the solvent insoluble resin and the solvent soluble resin is 1:0.5-4.0 in volume ratio. The volume ratio between the binder resin and the sintering powder is 40:60-65:35. The above materials are formed into an ordinary pellet state and used in the same manner as the ordinary resin.

Now, descriptions will be made with reference to Figs. 1-6. A metal mold (1) comprises a female die (2) and a male die (3), and the female die (2) and the male die (3) are attached toafixeddieplate (15) and a moving die plate (16) respectively. The male die (3) is arranged so as to open and close with respect to the female die (2) (as a matter of course, although not shown in the figures, a relationship therebetween may be opposite to the above).

The female die (2) includes a first female member (2a) having a parting face (P2), a cavity member (30) formed with the mold cavity (4) and attached to the first female member (2a), a second female member (2b) formed in the rear side of the first female member (2a), a pin drive section (25), which is hydraulically or pneumatically driven for moving valve pins (7) forward/backward via a hot runner bush (20) and a valve pin operation rod (25a) and attached to the second female member (2b), a sprue-mounting block (27) attached to the rear side of the second female member (2b), a third female member (2d) constituting the rear side of the female die (2) for fixing the female die (2) to the fixed die plate (15), a spacer member (2c) disposed between the second female member (2b) and the third female member (2d) for forming a housing space (28) for the sprue-mounting block (27) between the members (2b) and (2d), auxiliary springs (25d) disposed between the third female member (2d) and the valve pin operation rod (25a) for pressurizing the valve pins (7) in the gate-cut direction to urge the gate-cut operation of the pin drive section (25), and the valve pins (7).

The first female member (2a) is formed with one or a plurality of recess (18) from the parting face (P2) thereof to the rear face, and the recess (18) receives the cavity member (30) formed with the mold cavity (4) having the opening at the parting face (P2) side. Here, the recess of the mold cavity (4) is formed in accordance with the outer periphery shape of the cylinder (10').

The mold cavity (4) of the cavity member (30) will be described in detail with reference to Fig. 5 and 6. In the portion where the cavity member (30) faces to the hot runner bush (20), a thin gate (8), which communicates with the molding material injection path (12) of the hot runner bush (20), is formed. Being continued to the gate (8), an outer periphery portion of a thin front-end portion (10a) of the cylinder (10'), to which a needle for a syringe having a diameter slightly larger than the gate (8) is attached, is formed. And further, being continued to the thin front-end portion (10a), the outer periphery portion of the cylinder body (10b) is formed. The outer periphery portion of a flange portion (10c) having the largest diameter is formed in the parting face side.

As shown in the enlarged view of the gate portion in Fig. 5, a portion (8a) from the thin front end portion (10a) toward the rear direction [molding material supply side (1)] in the gate (8) is formed in a straight cylindrical shape; and a horn-like portion (8b) is formed in a horn-like shape being widely opened toward the rear direction from the cylindrical portion (8a). And it is arranged so that the front-end portion of the valve pin (7), which will be described later, is precisely engaged with the portion of the gate (8). And it is arranged so that the front-end portion of the valve pin (7), which will be described later, is inserted into and pulled out from the gate (8) to open/close the gate (8).

In the hot runner bush (20), the molding material injection path (12), which is inserted with the valve pin (7) and is connected to the molding material communicating path (24), is formed; the front-end portion thereof is connected to the gate (8), and is formed being tapered the same as that of the horn-like portion (8b) of the gate (8). In the hot runner bush (20), for example, a heater (29) is disposed to heat the molding material (9) within the molding material injection path (12) of the hot runner bush (20) up to the gate (8) to keep the molten state thereof. Reference numeral (19) denotes a receiving hole for the hot runner bush (20).

As described above, the sprue-mounting block (27) is attached with a sprue bush (22); and being communicated with the sprue bush (22), one or plurality of the molding material communicating paths (24), which is branched on its way and connected to the molding material injection paths (12), are formed through the sprue bush (22) and the sprue-mounting block (27). Further, guide holes (21) for guiding the valve pins (7), which will be described later, are formed in the sprue-mounting block (27).

The valve pin (7) is a member having a rod-like shape of which the front end portion is formed in a tapered shape, and the rear end thereof is fixed to the valve pin operation rod (25a). The valve pin (7) is slidably inserted through the guide hole (21), and the portion protruding from the sprue-mounting block (27) is inserted into the molding material injection path (12) of the hot runner bush (20). The front-end portion of the valve pin (7) is formed so as to precisely engaged with the gate (8). That is, as shown in the enlarged cross sectional view in Fig. 6, the front-end portion of the valve pin (7) includes a portion (7a), which straightly extends from the cavity side end (11) toward the rear direction in accordance with the cylindrical portion (8a) of the gate (8), and a tapered portion (7b) of which the diameter increases gradually toward the rear direction from the straightly extending portion (7a). The taper angle of the tapered portion (7b) is slightly smaller and obtuse than that of the horn-like portion (8b). Accordingly, when the front-end portion is inserted into the gate (8), the front end portion is guided by the horn-like portion (8b), and the straightly extending portion (7a) of the front end portion perfectly fits with the cylindrical portion (8a) of the gate (8) ; thereby the gate-cut is reliably performed. In other words, the straightly extending portion (7a) and the cylindrical portion (8a) of the gate (8) are molded so that the diameter and the inner diameter thereof fit with each other with nearly zero error.

Further, on the cavity side end (11), a circular cone recess (7c) is formed so that circular cone-like portion (5e) on the front end of the core (5), which will be described later, precisely fits therewith. The diameter (d) of the circular cone recess (7c) on the cavity side end (11) is formed so as to be identical to the maximum diameter (d) of the circular cone-like portion (5e) on the front end of the core (5), but smaller than the inner diameter (D) of the cylindrical portion (8a). Accordingly, a gap (K) is formed between the cylindrical portion (8a) and the circular cone-like portion (5e) as shown in Fig. 5. When the front-end portion of the valve pin (7) is separated away from the gate (8), the molding material (9) flows into the cavity (6) through the gap (K) as shown in Fig. 5. On the other hand, when the front-end portion of the valve pin (7) is engaged with the gate (8), the gap (K) is closed by the front ring portion (11a) of the cavity side end (11). As a matter of course, at this time, since the straightly extending portion (7a) is fitted with the cylindrical portion (8a) of the gate (8) with no gap, the molding material (9) does not enter into the cylindrical portion (8a). The front ring portion (11a) means a plane ring face between the periphery of the cavity side end (11) and the maximum inner diameter of the circular cone recess (7c).

Further, in the front-end portion of the valve pin (7), a front-end narrow hole (13a), which is drilled from the head portion in the axial direction of the circular cone recess (7c), and a perpendicular narrow hole (13b), which is perpendicular thereto and communicates the front-end narrow hole (13a) and the outer surfaces of the valve pin (7), are formed; and the front-end narrow hole (13a) and the perpendicular narrow hole (13b) forms a communicating hole (13).

The pin drive section (25) includes cylinder holes (25b) formed in the second female member (2b) and piston members (2 5c), and the valve pin operation rods (25a) are bridged onto the piston members (25c). By activating the piston members (25c), the valve pins (7) are driven to slide via the valve pin operation rods (25a). Reference symbols (M) and (N) denote outlets and inlets of the compressed oil/air for activating the piston members (25c). Owing to the working of the auxiliary springs (25d), the dimensions of the pin drive section (25) can be reduced, and thereby the entire sizes of the metal mold (1) can be reduced.

The male die (3) includes a male die body (3a) attached to the moving die plate (16), one or a plurality of cores (5) attached inside of the male die body (3a) in alignment with the die cavities (4) and an intermediate die (3b), which is disposed so as to be brought into contact with and parted from the inside of the male die body (3a) and the core (5) is inserted thereinto and pulled out therefrom, and push-out members (26) that, after the metal mold is opened, pushes the intermediate die (3b) in the separating direction to separate the molded cylinders (10').

An embedded end portion (5d) of the core (5) is embedded in the male die body (3a), and the core (5) includes a base portion (5c) protruding from the inside of the male die body (3a), a columnar portion (5b), which has the same shape as the inner peripheral shape of the cylindrical portion of the mold cavity (4) in the front end side from the base portion (5c) and forms the inner shape of the flange portion (10c) of the cylinder (10') and the cylinder portion (10b), and a projecting portion (5a) formed being projected in the center of the front end of the columnar portion (5b) to form the inner periphery surface of the needle mounting portion (10a) of the cylinder (10'). The front-end portion of the projecting portion (5a) has a circular cone-like shape as described above, and the diameter of the circular cone-like portion (5e) is (d).

The operation of the metal mold (1) according to the present invention will be described below. First of all, the moving die plate (16) is activated to press the male die (3) onto the female die (2) and mold them. At this time, the state where the gate (8) is closed by the front-end portion of the valve pin (7) and the circular cone-like portion (5e) at the front end of the core (5) is closely fitted with the circular cone recess (7c) of the valve pin (7) is obtained as shown in Fig. 1.

Then, the pin drive section (25) is activated to pull out the valve pin (7) to open the gate (8) as shown in Fig. 2. In this state, an injection-molding machine is activated and the metered molding material (9) is injected through a nozzle (23). The metered molding material (9) is injected into the cavity (6) through the gate (8) via the sprue bush (22), the molding material communicating path (24) and the molding material injection path (12) being applied with a high pressure (for example, 1,000-2,000 kg/cm²). The state at this time is illustrated in detail in the enlarged drawing in Fig. 5.

As illustrated in Fig. 5, since the gate (8) is formed on the center axis (CL) of the core (5), the gap (K) formed by the cylindrical portion (8a) of the gate (8) and the projecting portion (5a) of the core (5) is formed with an identical width [(D-d)/2] all around the periphery thereof. Therefore, the metered molding material (9), which flows into the cavity (6) through the gate (8) being applied with a high pressure, flows into cavity (6) uniformly all around the periphery thereof. Accordingly, the force is applied uniformly onto the outer periphery of the core (5). Unlike the conventional manner, the core (5) is not sagged to be inclined in one direction. Therefore, the cavity (6) does not generate nonuniform wall thickness from the beginning to the end of the injection molding; and accordingly, nonuniform wall thickness is not generated in the thickness of the molded cylinder (10').

When the cavity (6) has been filled with the metered molding material (9) as described above, the pressure applying and maintaining step starts to continuously apply a pressure to the filled molding material (9) within the cavity (6) from the nozzle (23) of the injection molding machine. When being cooled down, although the filled molding material (9) gradually solidifies and simultaneously deflates, owing to the pressure, the molding material (9) is replenished from the gate (8); and thus, the cylinder (10') is prevented from sagging due to the pressure above. When the cylinder (10') is cooled down to a certain level and no deflation is caused, the pressure applying and maintaining step is terminated, the pin drive section (25) is activated to reverse to make the valve pin (7) advance; thereby the gate (8) is closed with the front-end portion of the valve pin (7) as illustrated in detail in the enlarged view in Fig. 6.

At this time, in the gate (8) portion, the surplus molding material (9a) caught between the cavity side end (11) of the valve pin (7) and the front end (14) of the core (5) can escape to the molding material injection path (12) through the communicating hole (13). Therefore, the circular cone-like portion (5e) at the front end of the valve pin (7) is closely fitted with circular cone recess (7c) on the cavity side end (11) of the valve pin (7) to close the front-end narrow hole (13a). Further, the straightly extending portion (7a) of the valve pin (7) engages with the cylindrical portion (8a) of the gate (8) with no clearance to close the gate (8). Thus, the gap (K) is closed by the front ring portion (11a) of the periphery portion on the cavity side end (11) of the valve pin (7); and the gate-cut is reliably performed with a small force. Accordingly, the cavity (6) is reliably blocked off from the molding material injection path (12).

Through the following cooling step, the filled molding material (9) within the cavity (6) is gradually cooled down and solidified. When the molding material (9) has been solidified, the moving die plate (16) is activated to separate the male die (3) from the female die (2) to open the metal mold as shown in Fig. 3. The molded formed product (10) is pulled out form the mold cavity (4) of the female die (2) being mounted on the core (5).

At this time, as illustrated in detail in the enlarged view in Fig. 6, the front end of the needle mounting portion (10a) of the cylinder (10') is completely blocked off from the molding material injection path (12). However, since the molding material (9) within the molding material injection path (12) is maintained in a molten state by the hot runner bush (20), the cylinder (10') as the molded formed product is taken out from the mold cavity (4) in a completely molded state, unlike the conventional manner, free from a cold runner. Therefore, the cold runner, which is conventionally disposed of uselessly, is not generated.

Last, the push-out member (26) is activated to separate the intermediate die (3b) from the male die body (3a); the cylinder (10') is pushed out being engaged with the flange portion (10c) thereof to separate the cylinder (10') from the core (5). After taking out the cylinder (10'), the parting face is cleaned, and the metal mold is molded to repeat the above-described steps.

### Industrial Applicability

As described above, according to the present invention, since the gate is formed on the center axis of the core, the metered molding material injected into the cavity from the gate flows uniformly around the peripheral surface of the core. Therefore, since the force is uniformly applied to the side face of the core all around the peripheral surface thereof, the core is prevented from falling in one direction but always positioned at the center of the mold cavity. Accordingly, the molded formed product is free from the non uniform wall thickness.

## Claims

1. A metal mold, comprising:
a cavity having a predetermined internal shape;
a molding material injection path communicated with the cavity via a gate for supplying a metered fluid molding material to the cavity; and a valve pin disposed within the molding material injection path so as to be inserted into and pulled out from the gate,
wherein the cavity is formed with a cylindrical mold cavity and a columnar core to be coaxially inserted into and pulled out from the mold cavity, and the gate for injecting the molding material is formed in alignment with the center axis of the mold cavity.

2. The metal mold according to claim 1, wherein the mold cavity forms the outer surface of a cylinder and the core is for forming the cylinder inner surface.

3. The metal mold according to claim 1, wherein the molding material is a kneaded material of a sintering powder and a resin binder.

4. The metal mold according to claim 1, wherein the mold cavity forms the outer surface of the cylinder and the core is for forming the cylinder inner surface, and the molding material is a kneaded material of a sintering powder and a resin binder.

5. A formed body molding method, comprising the steps of:
(a) injecting a metered molding material from the molding material supply side into a cavity via a gate to fill the cavity therewith,
(b) after filling the cavity, applying and maintaining a predetermined pressure to the filled material within the cavity,
(c) after completing the pressure applying and maintaining step and after gate cutoff, returning a surplus molding material remaining at the gate portion to the molding material supply side,
(c) cooling the molding material within the cavity to solidify into a molding, and
(d) taking out the molding,
wherein the cavity includes a cylindrical mold cavity and a columnar core to be coaxially inserted into and pulled out from the mold cavity, and the gate for injecting the molding material is formed in alignment with the center axis of the mold cavity, a metered resin is injected from the front end side of the core to fill the core therewith.

6. The formed body molding method according to claim 5, wherein the mold cavity forms the outer surface of a cylinder and the core is for forming the cylinder inner surface.

7. The formed body molding method according to claim 5, wherein the molding material is a kneaded material of a sintering powder and a resin binder.

8. The formed body molding method according to claim 5, wherein the mold cavity forms the outer surface of the cylinder and the core is for forming the cylinder inner surface, and the molding material is a kneaded material of a sintering powder and a resin binder.
